# EUROPEAN PATENT SPECIFICATION

(11) **EP 2 392 525 B1**
(45) Date of publication and mention of the grant of the patent: **08.05.2013**
(21) Application number: 10164804.6
(22) Date of filing: 03.06.2010
(51) Int. Cl.: B65G 1/07, B65G 57/03, B65G 57/24, B65B 11/02

(54) **Pallet rack for transporting palletized goods**
Palettengestell zum Transport von Gütern auf Paletten
Structure à palettes pour transporter des marchandises mises sur palettes

(43) Date of publication of application: 07.12.2011
(73) Proprietor: Prospect AB, 291 23 Kristianstad (SE)
(72) Inventor: Hennig, Ralf, 291 95 Färlöv (SE)
(74) Representative: Milanov, Nina Vendela Maria

(56) References cited:
- WO-A2-2007/038146
- DE-A1- 2 905 111
- DE-A1- 3 210 189
- FR-A1- 2 397 348
- JP-A- 2004 059 281
- US-A- 4 593 517
- US-A- 4 607 476

## Description

### Field of the Invention

The invention relates to a pallet rack for transporting palletized goods on a pallet between different loading positions and an unloading position for the finished pallet.

### Background of the Invention

Order picking, which is often called mix palletizing, is one of many palletizing methods. Order picking is used in distribution centres and warehouses for example where different product types, which may vary in dimensions and content, are manually picked and putted on a same pallet according to a customer order. The products are picked on full stock-keeping unit pallets or from racks or shelves.

DE 2 905 111 shows a double-rack movable in a stationary frame having one single loading station.

Automated or robotized mix palletizing systems and methods are known in the art. US 2008/0267759 discloses one order picking system comprising stations for receiving stock-keeping unit pallets or supplier pallets with layers of identical products, a mixed pallet or customer pallet receiver and a robot and pallet support shuttle for receiving an empty pallet, carrying the empty pallet adjacent a selected one of the stock-keeping unit pallet stations, repeatedly charging at least one of the selected products from the stock-keeping unit pallet stations on the empty pallet, until a mixed pallet is completed according to an order and unloading the mixed pallet onto the mixed pallet receiver to be picked up.

The previously known combined pallet support and robot shuttle comprises a robot and a pallet, both being mounted on a same shuttle for movement. The robot picks the products from full stock-keeping unit pallets, located along the path of the shuttle, and places the products on the mixed pallet.

The prior art also including a conveyor system consisting of chain conveyors and roller conveyors to handle a pallet between different robot cells and an unloading position for a mixed pallet.

The mixed pallet or customer pallets will contain different types of stock-keeping units. For instance, in fruit and vegetable handling the mix of stock-keeping units will be according to the shop order and the actual balancing of the system. The stock-keeping units will be placed on the customer pallets in the following order, first plastic boxes, secondly, so called, banana boxes and finally other boxes. Such order is depending of the stability of the different type of boxes. The problem in handling a mixed pallet is that different type of boxes may become unstable and the boxes may fall from the pallet.

### Summary of the Invention

It is an object of the present invention to provide a safe and secure loading of mixed pallets. In accordance with the present invention there is provided a pallet rack for transporting palletized goods on a pallet between different loading positions and an unloading position for the pallet characterised in that the pallet rack having a frame of essentially rigid side walls and a vertically moveably base for supporting the pallet in a position where the upper loading surface is kept in a desired position for loading each layer of goods, whereupon a completed layer of goods is lowered into the pallet rack to provide an upper loading surface for the following layer and to provide an outer support on each side of the completed layer of goods.

### Brief Description of the Drawings

This and other aspects of the present invention will now be described in more detail, with reference to the appended drawings showing a currently preferred embodiment of the invention.
Figure 1 shows a schematic view in perspective of a pallet rack according to the present invention, and
Figure 2 shows a schematic view in perspective of an upper portion of the pallet rack of figure 1 at a loading position.

### Detailed Description

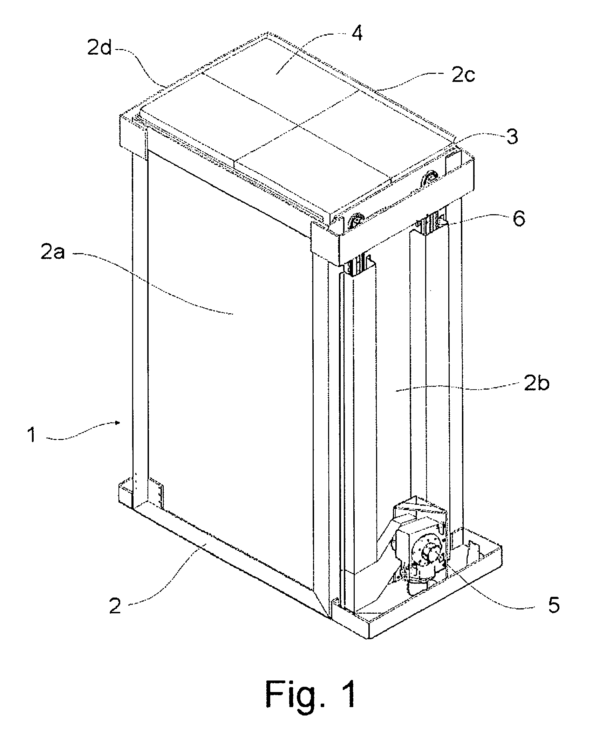

Figure 1 discloses a pallet rack 1 for transporting palletized goods (not shown) on a pallet (not shown) between different loading positions and an unloading position for the finished pallet. The pallet rack 1 having a frame 2 of four essentially rigid side walls 2a - 2d forming a parallelepiped with an essential rectangular cross-section and a height that is sufficient for housing the finished pallet within the pallet rack 1. The side walls 2a - 2d support the palletized goods, as plastic boxes, banana boxes and other boxes, until and during wrapping. The side walls 2a - 2d are preferably made of steel plate, but other material, such as aluminium or plastic, is also possible and also other structure, such as net, grating or similar. The pallet rack 1 having a vertically moveably base 3 for supporting the pallet in a position, where the upper loading surface 4 is kept in a desired position for loading each layer of goods, whereupon a completed layer of goods is lowered into the pallet rack to provide an upper loading surface 4 for the following layer and to provide an outer support on each side of the completed layer of goods. The base 3 is lifted by a motorized gear box 5 arranged at the rack 1 and is held in respective upper position by braking said gear box 5 at desired positions. The gear box 5 is motorized by an external motor (not shown) docked into said gear box 5. The external motor is preferably pneumatically or electrically operated. The rack 1 is equipped with a hoist 6 in connection to the gear box 5 for lifting and lowering the base 3 and is provided with a roller conveyor (not shown). Thus, the hoist 6 will be driven by a motor placed on places where vertical movement of the base 3 is requested. The rack 1 is used to transport palletized goods on a pallet, preferably an EU-pallet, but any kind of pallet is within the frame of the present invention. It consists of the frame 2 that supports the stacks of stock-keeping units while transporting. An empty pallet is placed on the roller conveyor, which is placed on the hoist 6. When a vertical movement is needed a docking unit including said motor is used to create the movement.

A robot (not shown) will according to the present invention always palletize on the top of the rack 1 on the upper loading surface 4. When requested the hoist 6 on the rack 1 will lower the newest layer of boxes or other goods down into the rack 1, wherein the layer will be guided by the side walls 2a - 2d.

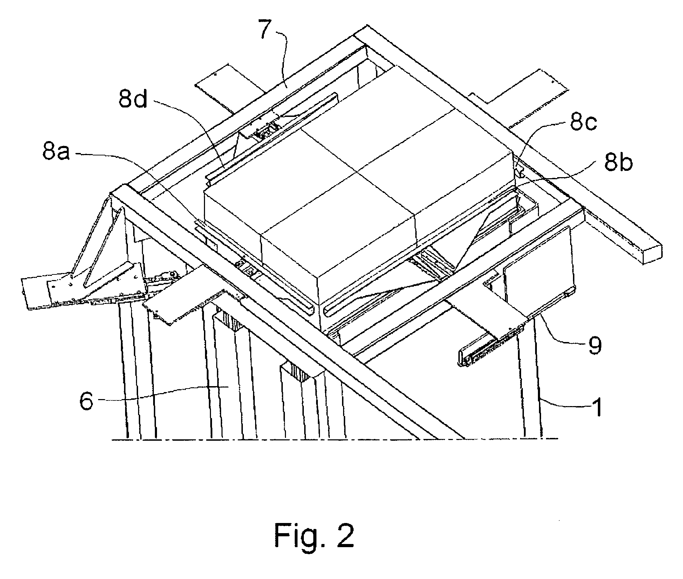

Figure 2 discloses a layer stabilizing frame 7, which is located at each palletizing point and being placed just above the pallet rack 1. The layer stabilizing frame 7 comprises support plates 8a - 8d and a respective fixating cylinder 9 at each side of the rack 1, which hold respective support plate 8a - 8d in position while palletizing. The purpose of the layer stabilizing frame 7 is to locate and to hold the goods of the top layer, on which the robot is palletizing, at the right position related to its surface co-ordinates. This is necessary when palletizing plastic stock-keeping units. The layer stabilizing frame 7 will also help guiding the completed layers down into the rack 1.

When the customer pallet is finalized it will be transported to a stretch film applicator (not shown). In a position right below a wrapper (not shown) the rack 1 will run the hoist 6 upwards and the base 3 being raised simultaneously as the stretch film applicator apply stretch film onto the finished pallet. When the whole pallet is wrapped it will be at the upper position of the hoist 6. Thereafter, it will be transferred from the rack 1 to a roller conveyor, while an empty pallet is transferred to the rack 1, which subsequently is transferred back to the robot cells for a new customer order.

The finished customer pallet will be transferred from the wrapping machine to an elevator which will take it down to floor level. At the floor level the pallet will be transported to the out feed conveyor, and picked away by a fork lift.

## Claims

1. A pallet rack (1) for transporting palletized goods on a pallet between different loading positions and an unloading position for the finished pallet, the pallet rack (1) having a frame (2) of essentially rigid side walls (2a - 2d) and a vertically movable base (3) for supporting the pallet in a position where the upper loading surface (4) is kept in a desired position for loading each layer of goods, whereupon a completed layer of goods is lowered into the pallet rack (1) to provide an upper loading surface (4) for the following layer and such that the frame (2) provides an outer support on each side of the completed layer of goods, wherein the frame (2) is arranged to support the goods during said transportation between different loading positions.

2. A pallet rack (1) according to claim 1, **characterised in that** the base (3) is lifted by a motorized gear box (5) arranged at the rack (1) and is held in respective upper position by braking said gear box (5) at desired positions.

3. A pallet rack (1) according to claim 2, **characterised in that** the gear box (5) is motorized by an external motor docked to said gear box (5).

4. A pallet rack (1) according to claim 3, **characterised in that** the external motor is pneumatically or electrically operated.

5. A pallet rack (1) according to any of the claims 1 to 4, **characterised in that** a layer stabilizing frame (7) at each loading position is located just above the pallet rack (1) to provide an outer support on each side of the layer of goods on the upper loading surface (4).

6. A pallet rack (1) according to claim 5, **characterised in that** the layer stabilizing frame (7) comprising support plates (8a - 8d) and a respective fixating cylinder (9) at each side of the rack (1), which hold respective support plate (8a - 8d) in position while palletizing.

7. A pallet rack (1) according to any of the claims 1 to 6, **characterised in that** a stretch film applicator (not shown) is in position above the rack (1) in the unloading position and the base (3) being raised simultaneously as the stretch film applicator apply stretch film onto the finished pallet.

8. A method for transporting, by a pallet rack (1), palletized goods on a pallet between different loading positions and an unloading position for the finished pallet, the pallet rack (1) having a frame (2) of essentially rigid side walls (2a - 2d) and a vertically movable base (3) for supporting the pallet, wherein the method comprises:
providing the pallet rack (1) at a first loading position;
arranging the pallet rack (1) such that an upper loading surface (4) of the pallet rack (1) is kept in a desired position for loading a first layer of goods;
loading a first layer of goods on the top of the rack on the upper loading surface (4);
lowering, by moving the base (3) vertically, a completed layer of goods into the pallet rack (1), such that an upper loading surface (4) is provided for the following layer, and;
transporting the pallet rack (1) to a second loading position, wherein the goods are supported by the frame (2) during the transportation; and
loading a second layer of goods on top of the rack on the upper loading surface (4).

9. The method according to claim 8, further comprising:
transporting the pallet rack (1) to a stretch film applicator;
raising, by moving the base (3) vertically, the pallet; and
applying, by the stretch film applicator, stretch film onto the finished pallet, simultaneously as the pallet is raised.

10. The method according to any of the claims 8 - 9, wherein the base (3) is moved in a vertical direction by a motorized gear box (5) arranged at the rack (1) and is held in respective upper position by braking said gear box (5) at desired positions, and in that the gear box (5) is motorized by an external motor docked to said gear box (5).

11. The method according to any of the claims 8 - 10, wherein at least one of the steps of loading is performed by a robot.

12. A system for transporting palletized goods on a pallet between different loading positions and an unloading position for the finished pallet, the system comprising:
a pallet rack (1) having a frame (2) of essentially rigid side walls (2a - 2d) and a vertically moveable base (3) for supporting the pallet in a position where an upper loading surface (4) is kept in a desired position for loading each layer of goods, whereupon a completed layer of goods is lowered into the pallet rack (1) to provide an upper loading surface (4) for the following layer and such that the frame (2) provides an outer support on each side of the completed layer of goods, wherein the frame (2) is arranged to support the goods during said transportation between different loading positions;
transporting means for transporting the pallet rack (1) between the different of loading positions;
a robot arranged at each loading position to palletize on the top of the rack (1) on the upper loading surface (4);
a stretch film applicator which is arranged to apply stretch film onto the finished pallet simultaneously as the base (3) is raised.

## Patentansprüche

1. Palettenregal (1) zum Transportieren von Waren auf einer Palette zwischen verschiedenen Ladepositionen und einer Abladeposition für die fertiggestellte Palette, wobei das Palettenregal (1) einen Rahmen (2) mit im Wesentlichen starren Seitenwänden (2a bis 2d) und eine vertikal bewegliche Basis (3) zum Stützen der Palette in einer Position aufweist, in der die obere Ladefläche (4) in einer gewünschten Position zum Laden jeder Lage von Waren gehalten ist, woraufhin eine abgeschlossene Lage von Waren zum Vorsehen einer oberen Ladefläche (4) für die folgende Lage in das Palettenregal (1) abgesenkt wird, und damit der Rahmen (2) eine Außenstütze auf jeder Seite der abgeschlossenen Lage von Waren vorsieht, wobei der Rahmen (2) zum Stützen der Waren während des Transports zwischen verschiedenen Ladepositionen angeordnet ist.

2. Palettenregal (1) nach Anspruch 1, **dadurch gekennzeichnet, dass** die Basis (3) durch ein motorisiertes Getriebe (5), das an dem Regal (1) angeordnet ist, angehoben und durch Bremsen des Getriebes (5) an gewünschten Positionen in jeweiliger oberer Position gehalten wird.

3. Palettenregal (1) nach Anspruch 2, **dadurch gekennzeichnet, dass** das Getriebe (5) durch einen externen Motor motorisiert ist, der an das Getriebe (5) gekoppelt ist.

4. Palettenregal (1) nach Anspruch 3, **dadurch gekennzeichnet, dass** der externe Motor pneumatisch oder elektrisch betrieben ist.

5. Palettenregal (1) nach einem der Ansprüche 1 bis 4, **dadurch gekennzeichnet, dass** ein Lagenstabilisierungsrahmen (7) zum Vorsehen einer Außenstütze auf jeder Seite der Lage von Waren auf der oberen Ladefläche (4) an jeder Ladeposition genau über dem Palettenregal (1) angeordnet ist.

6. Palettenregal (1) nach Anspruch 5, **dadurch gekennzeichnet, dass** der Lagenstabilisierungsrahmen (7) Stützplatten (8a bis 8d) und einen jeweiligen Fixierzylinder (9) auf jeder Seite des Regals (1) aufweist, die jeweilige Stützplatten (8a bis 8d) beim Palettieren in Position halten.

7. Palettenregal (1) nach einem der Ansprüche 1 bis 6, **dadurch gekennzeichnet, dass** eine Streckfolienauftragsvorrichtung (nicht gezeigt) über dem Regal (1) in der Abladeposition in Position ist und die Basis (3) simultan angehoben wird, wenn die Streckfolienauftragsvorrichtung Streckfolie auf die fertiggestellte Palette aufträgt.

8. Verfahren zum Transportieren von palettierten Waren auf einer Palette durch ein Palettenregal (1) zwischen verschiedenen Ladepositionen und einer Abladeposition für die fertiggestellte Palette, wobei das Palettenregal (1) einen Rahmen (2) mit im Wesentlichen starren Seitenwänden (2a bis 2d) und eine vertikal bewegliche Basis (3) zum Stützen der Palette aufweist, wobei das Verfahren Folgendes aufweist:
Vorsehen des Palettenregals (1) an einer ersten Ladeposition;
derartiges Anordnen des Palettenregals (1), dass eine obere Ladefläche (4) des Palettenregals (1) in einer gewünschten Position zum Laden einer ersten Lage von Waren ist;
Laden einer ersten Lage von Waren an der Oberseite des Regals auf die obere Ladefläche (4);
Absenken durch vertikales Bewegen der Basis (3) einer abgeschlossenen Lage von Waren in das Palettenregal (1), sodass eine obere Ladefläche (4) für die folgende Lage vorgesehen wird; und
Transportieren des Palettenregals (1) zu einer zweiten Ladeposition, wobei die Waren während des Transports durch den Rahmen (2) gestützt werden; und
Laden einer zweiten Lage von Waren an der Oberseite des Regals auf die obere Ladefläche (4).

9. Verfahren nach Anspruch 8, ferner aufweisend:
Transportieren des Palettenregals (1) zu einer Streckfolienauftragsvorrichtung;
Anheben der Palette durch vertikales Bewegen der Basis (3) ; und
simultanes Auftragen von Streckfolie durch die Streckfolienauftragsvorrichtung auf die fertiggestellte Palette, wenn die Palette angehoben wird.

10. Verfahren nach einem der Ansprüche 8 bis 9, wobei die Basis (3) durch ein motorisiertes Getriebe (5), das an dem Regal (1) angeordnet ist, in einer vertikalen Richtung bewegt wird und durch Bremsen des Getriebes (5) an gewünschten Positionen in jeweiliger oberer Position gehalten wird, und wobei das Getriebe (5) durch einen externen Motor motorisiert ist, der an das Getriebe (5) gekoppelt ist.

11. Verfahren nach einem der Ansprüche 8 bis 10, wobei mindestens einer der Schritte des Ladens durch einen Roboter ausgeführt wird.

12. System zum Transportieren von palettierten Waren auf einer Palette zwischen verschiedenen Ladepositionen und einer Abladeposition für die fertiggestellte Palette, das System aufweisend:
ein Palettenregal (1) mit einem Rahmen (2) mit im Wesentlichen starren Seitenwänden (2a bis 2d) und einer vertikal beweglichen Basis (3) zum Stützen der Palette in einer Position, in der die obere Ladefläche (4) in einer gewünschten Position zum Laden jeder Lage von Waren gehalten ist, woraufhin eine abgeschlossene Lage von Waren zum Vorsehen einer oberen Ladefläche (4) für die folgende Lage in das Palettenregal (1) abgesenkt wird, und damit der Rahmen (2) eine Außenstütze auf jeder Seite der abgeschlossenen Lage von Waren vorsieht, wobei der Rahmen (2) zum Stützen der Waren während des Transports zwischen verschiedenen Ladepositionen angeordnet ist;
Transportmittel zum Transportieren des Palettenregals (1) zwischen den verschiedenen Ladepositionen;
einen Roboter, der an jeder Ladeposition zum Palettieren an der Oberseite des Regals (1) auf der oberen Ladefläche (4) angeordnet ist;
eine Streckfolienauftragsvorrichtung, die zum simultanen Auftragen von Streckfolie auf die fertiggestellte Palette, wenn die Basis (3) angehoben wird, angeordnet ist.

## Revendications

1. Structure à palettes (1) pour transporter sur une palette des marchandises palettisées entre différentes positions de chargement et une position de déchargement pour la palette finie, la structure à palettes (1) ayant un cadre (2) constitué de parois latérales essentiellement rigides (2a-2d) et une base (3) déplaçable verticalement pour supporter la palette dans une position dans laquelle la surface de chargement supérieure (4) est maintenue dans une position souhaitée pour charger chaque couche de marchandises, une couche de marchandises complète étant ensuite abaissée dans la structure à palettes (1) pour fournir une surface de chargement supérieure (4) pour la couche suivante et de telle sorte que le cadre (2) assure un support extérieur de chaque côté de la couche complète de marchandises, le cadre (2) étant prévu pour supporter les marchandises au cours dudit transport entre différentes positions de chargement.

2. Structure à palettes (1) selon la revendication 1, **caractérisée en ce que** la base (3) est soulevée par une boîte de vitesses motorisée (5) disposée au niveau de la structure (1) et est maintenue dans une position supérieure respective en freinant ladite boîte de vitesses (5) dans des positions souhaitées.

3. Structure à palettes (1) selon la revendication 2, **caractérisée en ce que** la boîte de vitesses (5) est motorisée par un moteur externe arrimé à ladite boîte de vitesses (5).

4. Structure à palettes (1) selon la revendication 3, **caractérisée en ce que** le moteur externe fonctionne pneumatiquement ou électriquement.

5. Structure à palettes (1) selon l'une quelconque des revendications 1 à 4, **caractérisée en ce qu'**un cadre de stabilisation de couche (7) à chaque position de chargement est situé juste au-dessus de la structure à palettes (1) pour assurer un support extérieur de chaque côté de la couche de marchandises sur la surface de chargement supérieure (4).

6. Structure à palettes (1) selon la revendication 5, **caractérisée en ce que** le cadre de stabilisation de couche (7) comprend des plaques de support (8a - 8d) et un cylindre de fixation respectif (9) de chaque côté de la structure (1), qui retiennent en place la plaque de support respective (8a - 8d) au cours de la palettisation.

7. Structure à palettes (1) selon l'une quelconque des revendications 1 à 6, **caractérisée en ce qu'**un applicateur de film étirable (non illustré) est en position au-dessus de la structure (1) dans la position de déchargement et la base (3) est soulevée simultanément à mesure que l'applicateur de film étirable applique un film étirable sur la palette finie.

8. Procédé de transport sur une palette, par une structure à palettes (1), de marchandises palettisées entre différentes positions de chargement et une position de déchargement pour la palette finie, la structure à palettes (1) ayant un cadre (2) constitué de parois latérales essentiellement rigides (2a-2d) et une base (3) déplaçable verticalement pour supporter la palette,
le procédé comprenant :
fournir la structure à palettes (1) dans une première position de chargement ;
agencer la structure à palettes (1) de telle sorte qu'une surface de chargement supérieure (4) de la structure à palettes (1) soit maintenue dans une position souhaitée pour charger une première couche de marchandises ;
charger une première couche de marchandises sur le dessus de la structure sur la surface de chargement supérieure (4) ;
abaisser, en déplaçant la base (3) verticalement, une couche complète de marchandises dans la structure à palettes (1) de telle sorte qu'une surface de chargement supérieure (4) soit fournie pour la couche suivante, et
transporter la structure à palettes (1) jusqu'à une deuxième position de chargement, les marchandises étant supportées par le cadre (2) au cours du transport ; et
charger une deuxième couche de marchandises sur le dessus de la structure sur la surface de chargement supérieure (4).

9. Procédé selon la revendication 8, comprenant en outre :
transporter la structure à palettes (1) jusqu'à un applicateur de film étirable ;
soulever la palette en déplaçant la base (3) verticalement ; et
appliquer au moyen de l'applicateur de film étirable un film étirable sur la palette finie, simultanément au soulèvement de la palette.

10. Procédé selon l'une quelconque des revendications 8 et 9, dans lequel la base (3) est déplacée dans une direction verticale par une boîte de vitesses motorisée (5) disposée au niveau de la structure (1) et est maintenue dans une position supérieure respective en freinant ladite boîte de vitesses (5) dans des positions souhaitées, et en ce que la boîte de vitesses (5) est motorisée par un moteur externe arrimé à ladite boîte de vitesses (5).

11. Procédé selon l'une quelconque des revendications 8 à 10, dans lequel au moins l'une des étapes de chargement est effectuée par un robot.

12. Système de transport de marchandises palettisées sur une palette entre différentes positions de chargement et une position de déchargement pour la palette finie, le système comprenant :
une structure à palettes (1) ayant un cadre (2) constitué de parois latérales essentiellement rigides (2a-2d) et une base (3) déplaçable verticalement pour supporter la palette dans une position dans laquelle une surface de chargement supérieure (4) est maintenue dans une position souhaitée pour charger chaque couche de marchandises, une couche de marchandises complète étant ensuite abaissée dans la structure à palettes (1) pour fournir une surface de chargement supérieure (4) pour la couche suivante et de telle sorte que le cadre (2) assure un support extérieur de chaque côté de la couche complète de marchandises, le cadre (2) étant prévu pour supporter les marchandises au cours dudit transport entre différentes positions de chargement ;
un moyen de transport pour transporter la structure à palettes (1) entre les différentes positions de chargement ;
un robot disposé à chaque position de chargement pour palettiser sur le dessus de la structure (1) sur la surface de chargement supérieure (4) ;
un applicateur de film étirable qui est disposé de manière à appliquer un film étirable sur la palette finie simultanément au soulèvement de la base (3).
